# EUROPEAN PATENT APPLICATION

(11) **EP 1 017 035 A1**
(43) Date of publication of application: **05.07.2000**
(21) Application number: 99204618.5
(22) Date of filing: 29.12.1999
(51) Int. Cl.: G08G 1/0969, G09B 29/10, G01C 21/20

(54) **Representation system for road maps**

(30) Priority: 30.12.1998 NL 1010928
(71) Applicant: De Jongh, G., 7514 CV Enschede (NL)
(72) Inventor: De Jongh, G., 7514 CV Enschede (NL)

(57) **Abstract**

Maps, for instance a city map or a roadmap, with which the map solely contains relevant information for road users, such as motorists. Such a map contains thus the elements that a road user needs to be able to orientate himself and to find his way. These elements can concern the network of roads, round-a-bouts and/or traffic lights and the orientation of outstanding configurations, such as buildings, for instance a recognizable church, park or tunnel.

The invention attaches, primarily for roads, and if necessary also other elements, a (unique) number (read as number and/or letter and/or symbol) to the map. These numbers are represented successively on the map, if necessary in between strips, with the result that street names, etc. can in principle be left out.

By means of working, the searching of a street, and if necessary other elements, primarily is an issue of the approaching of the searched number through the locating of higher successively lower numbers on the map.

The mentioning of groups of numbers per strip on the map is an additional tool with the search of a road or another element.

## Description

### Maps in general

The invention concerns maps, such as a city map or a road map. The existing maps give information concerning the area, that is projected on the maps. On these maps streets and their interconnection are given, with the concerned streetnames. Further on, railroad tracks, watery areas, such as canals and ponds, industrial premises, buildings, green areas, such as woods and fields of grass, cemetaries and sports grounds are pointed out. Also, on (city) maps, district names, district numbers and other important buildings such as hospitals, post offices, railway stations, tourist information offices and offices of road patrol are mentioned.

### Source of disadvantages of the existing map

When a road user, such as a motorist, has to orientate himself with the help of a suchlike map, it is considerably difficult. This is the result of the multiplicity of information, that are of no importance to the finding of a route or the destination, the structure of the network of streets and roads is considerably hidden.
The existing map does not link up with the cognitive process along which people orientate themselves to find their destination. A reflection that tends to imitate the reality as best as possible, like a city map, even hinders this process.

People orientate themselves by adapting the structure of roads selectively. The memorizing is done through the number of turns that have to be made after passing a certain number of sideroads, crossings, etc.
Traffic lights, round-a-bouts and other elements that have to be taken into account by the road user, are used to aid the orientation.

With the existing map streetnames are given in the roads concerned. This information can hardly be used, as the streetnames are difficult or not readable from a driving car, or sometimes signs of streetnames are even missing. It neither aids the traffic safety.
The representation of the maps makes it very difficult to locate one's own position in one look. Due to the density of the information the overview on the map is lost.

### The invention

The disadvantages mentioned above of the existing maps are avoided by a map according to the invention, that is characterised as the map only consists of relevant elements for the road user. A map according to the invention consists solely of that information that the road user needs to orientate himself and to find his way.

These elements consist consequently of the network of roads concerned. In addition these elements include round-a-bouts and/or traffic lights. With the help of round-a-bouts and traffic lights the location on the map with respect to the real position can easily be determined.

According to another prefered form of the invention the elements include signs, that point out the city border. Furthermore these elements can include level crossings. These elements also make it possible to compare the real position to the position on the map in a fast manner.

In, again, another applicable form of the invention the map includes outstanding configurations, such as buildings, for instance a recognizable church, bridge, park or tunnel. Also by these configurations, it is easy to compare the position on the map to the real position in one look.

In even another applicable form of the invention the element streetnames are given by means of numbers of reference and/or letters of reference and/or symbols of reference. The advantage of this is that the map remains clear and is not unnecessarily complicated by a multiplicity of streetnames.

The use of numbers of reference and/or letters already gives an independent interconnected order of the elements, by orderly location of them on the map (for instance number 1 after number 2), in contradiction to the use of streetnames. For instance the number 100 for street "y" occurs directly after the number 99 for street "x" and before the number 101 for street "z", etc.

By preference the references are divided in groups and in strips, indicated on the map. Because of this, a number of reference and/or letter of reference in the strip concerned, can also be easily found.

### Arrangement by means of numbers and/or letters and/or symbols

Without prejudice to the fact that a certain group of numbers of reference and/or letters of reference and/or symbols of reference can be represented, the invention gives, through the succession in/within each strip of numbers and/or letters and/or symbols for the elements, already on itself the possibility to orientation on the location of a certain road/street or another element on the map with respect to the other roads/streets or other elements.
The references, with a division in groups and in strips on the map, are solely an additional tool for orientation on the map.

If a street with number "x" is searched, then it can also be found without the use of the groups and strips, namely in the neighbourhood of streets with a number bigger or smaller than the number "x". This is an independent search mechanism offered by the invention.

It is also the case, that when for instance the number "x-1" will be located at the end of a strip, the number "x" can automatically be found at the beginning of the following strip. An exception to this rule is only made for elements, in particular streets and roads, that cover more than one strip. A number given once, will in principle be maintained.

The result of this working structure of this invention is, that the usual system of coordinates and/or indications per column or row does no longer necessarily and primarily form the search system. Nevertheless the result is a systematic and clear representation of the location of elements on the map.

### Index

In a prefered applicable form the map includes an index, in which the numbers of reference and/or letters of reference are sorted and linked to the streetname concerned. Because of this, it can be easily verified whether the streetname concerned on the map matches the street in which one is located.

### Representation of the interconnected elements

A map according to the invention includes a representation of the network of streets according to a system of lines that represents primarily the interconnection of the streets. It is not necessary and sometimes even undesirable to hold on to a representation that reflects the reality on scale. Elements to point out the structure of the network of maps are used. These are elements that distinguish the roads in primary streets, secundary streets and tertiary streets. Several thicknesses of lines are used for this. The thickness of the line, that indicates the road, does not necessarily have a relation with the real width of a road in relation to the other roads. The invention originates with its own representation of the network of streets or roads, with which it is determined on the base of the structure which roads are represented as primary, secundary and tertiary roads.

### Surveyability of the map and index

In a map of the invention elements are being used to identify streets by their names. Herewith, numbers of reference and/or letters of reference or symbols are used. The advantage is that the map remains surveyable, ergo the representation of the structure of streets is not affected and that the street that is searched can more easily be found than the traditional squared indication on the other maps. This is provided by the logical order or cohesion of the elements of reference for the streetnames on the map. A participant of traffic that wants to find its destination by means of a traditional city map, is addressed to a square on the map in which the street can be found somewhere. The location of the street costs an unnecessary amount of time.
Furthermore, the map by preference also contains an index where the streetnames are (alphabetically) sorted and linked to the concerned figures of reference. This is why it is possible to locate the destination on the map quickly. Furthermore the index can indicate with which street the street concerned is connected.

In a prefered applicable form, parts having a high density of elements are enlarged with respect to the general scale. This is how the map remains surveyable. These, and other characteristics, are illustrated more precisely on the drawings enclosed.

### Explanation throw drawings

Figure 1 shows a map using the contemporary technique of mapping.

Figure 2 shows a map according to the invention.

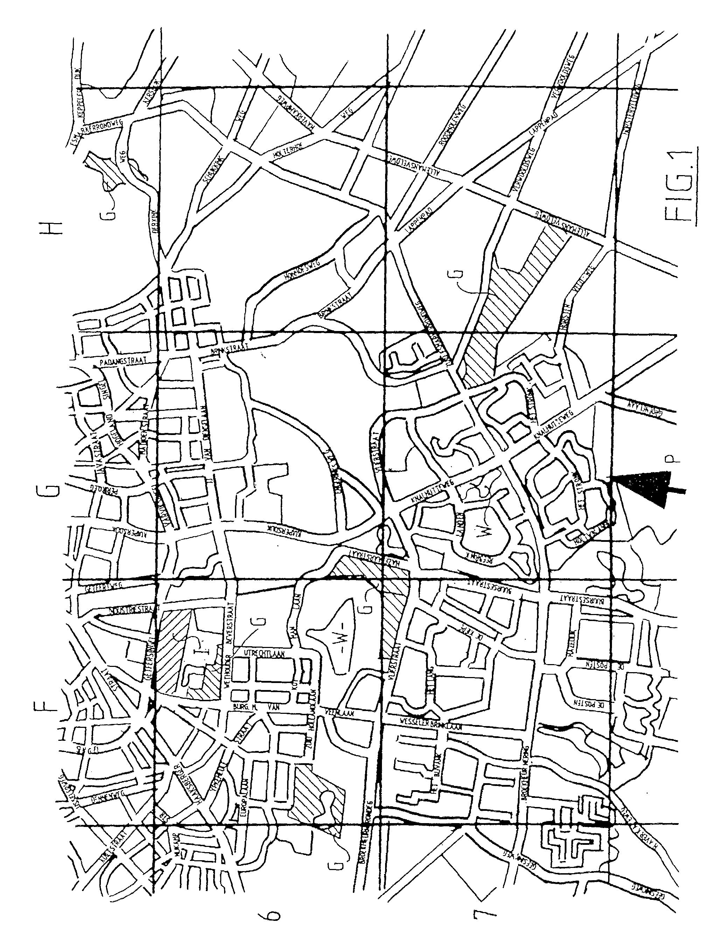

Figure 1 show an example of the contemporary technique of mapping. This snap shows part of a city. Such a map is classified in columns that are indicated with letters, and rows that are indicated with numbers. Arrow P indicates the part of the map G7. When a street is searched, for instance the "Knalhutteweg", this will be indicated in the index with G7. Following this, the street desired will be found in the square of G7. In this map streets are left out for the surveyability. This has the disadvantage that a street searched is not always indicated on the map.

Furthermore, it is difficult to see which streets are "circulation" streets and for instance which crossings contains traffic lights or round-a-bouts. Also on this map configurations are given that are not necessarily of importance to the road user, such as the watery areas W, the green areas G and the industrial areas I.

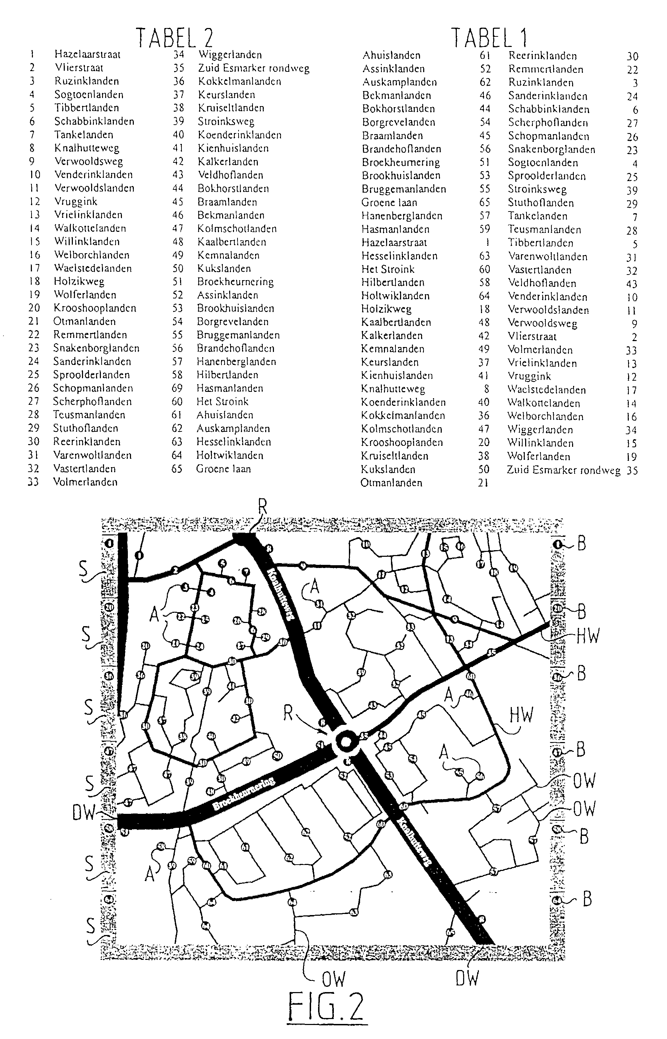

Figure 2 shows a detail of a map according to the invention. The part shown harmonizes with square G7 in figure 1. On this map "circulation" roads are indicated as DW, main roads are indicated as HW, and other roads are indicated as OW. By the differences in thickness of lines of these different roads, one look can be enough to recognize which roads are best to drive on.

Furthermore, the map indicates round-a-bouts as R, that serve as an excellent point of orientation. Also the streets are referred to by means of numbers of reference. These numbers of reference take up less space than the entire streetname, which makes the map more surveyable. In addition, streets that have a dead end or gardens are left out and solely indicated by means of a number of reference. These gardens or streets with a dead end are indicated by a street that ends in a number of reference (see reference A). By leaving out, if necessary, these gardens or streets with a dead end, unnecessary information is being left out of the map, which makes the map more easily surveyable. The numbers of reference are divided in groups by means of the strips placed and consequently represented within strips S on the map. In figure 2 the strips are indicated by means of a dotted line. At the beginning of a strip S it is given with a reference B what the first number is that can be found in the matching strip S. By combining this with the following strip or a previous strip, a number of reference of a street can easily be found on the map.

The map also contains a table 1 in which the names of the streets shown on the map are sorted in alphabetical order. Each streetname has a link to a number of reference, with the result that a street can quickly be found by consulting the index.

The invention by preference also contains a second index (table 2), in which the numbers of reference are sorted and are linked to a streetname. This way it can quickly be verified whether the street in which the user is located agrees with the position on the map, which he is thinking of.

It is also possible to indicate other relevant elements for the road users on the map. Herewith one can primarily think of traffic lights, but also signs that indicate the city border or the mentioning of one-way streets is possible.

The map shown in figure 2 can be a detail of a map of for instance an entire city, or it can be a separate map that can be searched after one has come to the border of an area on the detailed map, with use of a surveying map. A surveying map can harmonize in outline with the map shown in figure 1. At that, a separate detailed map for each square is available corresponding the invention.

### Digital

Moreover, it is not only possible to print a map according to the invention on paper, but it can also be used in a digital medium of information, with the result that the map can be shown on for instance a screen of a computer or a car navigation system.

## Claims

1. Map, for instance a city map or a road map, with the characteristic that the map solely consists of relevant elements, for road users, such as motorists.

2. Map according to conclusion 1, with the characteristic that the elements include the concerning network of roads.

3. Map according to conclusion 1, with the characteristic that the elements include round-a-bouts (rotundas).

4. Map according to conclusion 1, with the characteristic that the elements include traffic lights.

5. Map according to conclusion 1, with the characteristic that the elements include signs that indicate the city border.

6. Map according to conclusion 1, with the characteristic that the elements include level crossings.

7. Map according to conclusion 1, with the characteristic that the elements include for the orientation outstanding configurations, such as buildings, for instance a recognizable church, bridge, park or tunnel.

8. Map according to conclusion 1, with the characteristic that the elements represent streetnames by means of numbers of reference and/or letters of reference and/or symbols of reference.

9. Map according to conclusion 8, with the characteristic of a successive arrangement of the numbers of reference and/or letters of reference and/or symbols of reference on the map through which the position on the map of one reference also implicates a clear indication for the location of other references on the map appearing in the succession.

10. Map according to conclusion 8 and 9, with the characteristic that the references are divided in groups, and that the groups are represented in strips on the map.

11. Map according to conclusion 8,9 and 10, with the characteristic that the reference for the element streetname for streets that appear on more than one strip on the map, is limited to one number of reference and/or letter of reference and/or symbol of reference of a certain group.

12. Map according to conclusion 8, which includes an index in which the numbers of reference and/or letters of reference and/or symbols of reference are sorted and linked to the streetnames concerned.

13. Map according to conclusion 8, which includes an index in which the streetnames are sorted and linked to the numbers of references.

14. Map according to conclusion 1, where parts having a high density of elements, are enlarged with respect to the general scale.
